# EUROPEAN PATENT APPLICATION

(11) **EP 1 905 293 A1**
(43) Date of publication of application: **02.04.2008**
(21) Application number: 06121526.5
(22) Date of filing: 29.09.2006
(51) Int. Cl.: A01D 75/00, A01B 73/00

(54) **Agricultural working machine**

(71) Applicant: CLAAS Selbstfahrende Erntemaschinen GmbH, 33428 Harsewinkel (DE)
(72) Inventor: Tippery, Steve, Omaha, NE 68138 (US); Schlüter, Michael, Omaha, NE 68138 (US)

(57) **Abstract**

The invention relates to an agricultural working machine (1), such as a combine harvester or forage harvester, with a drawing-in assembly (3) arranged on the front for accommodating a header attachment (12) which is designed to harvest and convey a harvesting crop (14), wherein a travelling mechanism (29) comprising at least one support wheel (31) is associated with the header attachment (12) on one or both sides of the drawing-in assembly (3), wherein the header attachment (12) is arranged pivotably about a swivel axis (19) extending transversely te the longitudinal direction (LR) of the agricultural working machine (1) on the drawing-in assembly (3) in such a manner that the header attachment (12) is automatically swivelled from a working position (B) into a transport position (C) when the drawing-in assembly (3) is lowered, and wherein at least one support wheel (31) of at least one travelling mechanism (29) supports the header attachment (12) on the ground (36) in the transport position (C). This ensures that the use of a separate header attachment carriage may be dispensed with. At the same time such a swivel mechanism enables support wheel arrangements to be brought quickly from a working to a non-working position without heavy physical work being required for that alteration.

## Description

The invention relates to an agricultural working machine, such as a combine harvester or forage harvester, with a drawing-in assembly arranged at the front for accommodating a header attachment according to the generic term of Claim 1.

An agricultural working machine of the type mentioned is disclosed in US 5,243,810. The combine harvester disclosed there is provided with an inclined feed duct with which is associated, on the front, a corn cutting unit with a large working width. To ensure that the weight of the corn cutting unit need not be fully supported unilaterally on the ground by the vehicle axles of the combine harvester, and to ensure at the same time that a separate cutter carriage can be dispensed with, support wheel arrangements are associated with the header attachment on both sides of the inclined feed duct in its rear region. In the shown embodiment one of the travelling mechanisms has a supporting wheel whilst the other travelling mechanism has support wheels arranged in pairs. If the header attachment is in the so-called working position, the axles of the support wheels run substantially parallel with the corn cutting unit so that the support wheels associated with these vehicle axles support the header attachment on the ground during the harvesting operation and consequently a high proportion of the header attachment weight reaches the ground via the support wheels, which ultimately results in a considerable relief of the load from the vehicle axles.

In the so-called non-working position the travelling mechanisms of the header attachment accommodating the support wheels can be swivelled 90° so that the axles bearing the support wheels are now arranged transversely to the header attachment. This enables the support wheels of the header attachment to act as castor wheels of the header attachment so that the use of a separate header attachment carriage may be dispensed with. To ensure that the support wheels reach this road transport position the operator of the agricultural working machine must disassemble the relevant travelling mechanisms when the header attachment is raised and refit them in the new position, offset by 90°, on the locking device provided for the new position. Such a rebuilding process is time-consuming and also requires major physical effort of the person carrying out the rebuilding work. The vehicle masses are frequently so high that several persons are required to rebuild the travelling mechanisms.

The object of the invention is therefore to avoid the disadvantages of the prior art described above and, in particular, to provide a device which dispenses with the use of a separate header attachment carriage and which at the same time enables support wheel arrangements to be brought from a working to a non-working position without heavy physical work being required for the rebuilding process.

This object is achieved according to the invention by the characterising features of Claim 1.

By designing the agricultural machine with a drawing-in assembly arranged on the front for accommodating a header attachment, where the adapted header attachment accommodates a travelling mechanism comprising at least one support wheel on one or both sides of the drawing-in assembly, and where the header attachment is arranged so that it can be swivelled at least about one swivel axis extending transversely to the longitudinal direction of the agricultural working machine on the drawing-in assembly in such a manner that the header attachment is automatically swivelled from a working position into a transport position when the drawing-in assembly is lowered and at least one of the support wheels of at least one of the travelling mechanisms supports the header attachment on the ground in the transport position, it is ensured that the use of a separate header attachment carriage may be dispensed with. At the same time such a swivel mechanism makes it possible to bring support wheel arrangements from a working into a non-working position without heavy physical work being required for the conversion process.

In an advantageous embodiment of the invention the swivelling of the header attachment from the working position into the non-working position comprises a swivel range of substantially 90°, so that this extremely small swivel range can be covered very quickly and at the same time only a short clearance is required to perform this swivel movement.

Such a swivel process can be achieved in a simple, compact design when the header attachment has a support frame in its rear region and when the swivel axis extending transversely to the longitudinal direction of the agricultural working machine is associated at the top, and the corresponding support frame structure of the travelling mechanism or mechanisms is associated at the bottom, with this support frame.

A rapid adaptation of the header attachment to the drawing-in assembly, which at the same time takes place almost without any fitting operations to be carried out manually by an operator, is provided in an advantageous alternative of the invention when the swivel axis extending transversely to the longitudinal direction of the agricultural working machine is associated at the top, and the corresponding support frame structure of the travelling mechanism or mechanisms is associated at the bottom, with an intermediate frame and the intermediate frame can be connected at least fixedly to the drawing-in assembly.

To prevent the header attachment from swivelling during the harvesting operation, it is proposed, in an advantageous embodiment of the invention, that the swivel axis extending transversely to the longitudinal direction of the agricultural working machine be locked in the working position of the header attachment.

The weight of the header attachment that can be supported by the travelling mechanism or mechanisms is even greater if, in an advantageous further development of the invention, the support frame structure of at least one of the travelling mechanisms comprises at least one travelling mechanism axle and the travelling mechanism axle accommodates at least one support wheel on each side.

So that the travelling mechanisms associated with the header attachment can be used to support the weight of the header attachment on the ground in the working operation of the agricultural working machine, for example during its use when harvesting in a field, provision is made, in an advantageous embodiment of the invention, for the support frame structure at least one of the travelling mechanisms to accommodate at the top a king pin mechanism, where the king pin mechanism is arranged fixedly or pivotably, by means of an intermediate frame structure, on the support frame of the header attachment or the intermediate frame. Since the king pin mechanism enables the travelling mechanism axle to swivel at least 90° , the corresponding travelling mechanism can be swivelled quickly between a working position and a non-working position. A particularly advantageous embodiment of the invention is achieved in this connection if the swivelling of the king pin mechanism is able to operate automatically or manually. Whilst automatic swivelling relieves the operator of the agricultural working machine of physically heavy rebuilding work to a large extent, manual adjustment represents a low cost alternative.

In a further advantageous embodiment of the invention the drawing-in assembly can be swivelled about a swivel axis extending transversely to the longitudinal direction of the agricultural working machine by means of adjusting cylinders, whilst at the same time the swivel movement of the header attachment is effected about at least one of the swivel axes extending transversely to the longitudinal direction of the agricultural working machine. If detecting the position of the adjusting cylinders of the drawing-in assembly and/or the spatial position of the drawing-in assembly, coding it in the form of position signals and transmitting these position signals to a control and evaluation unit, then generating cylinder adjusting signals for the adjusting cylinders of the header attachment in the control and evaluation unit as a function of the position signals of the drawing-in assembly, these adjusting signals resulting in automatic swivelling of the header attachment about its swivel axis, it can be ensured, during the swivelling process, that the support wheels are at least partially load-relieved. The advantage of such a method is that the support wheels to be displaced in the longitudinal direction, and hence transversely to their direction of rotation on the ground, are exposed to reduced wear.

In another embodiment of the invention provision may be made, during the lowering of the drawing-in assembly and swivelling of the header attachment, for the agricultural working machine to be moved in the reversing direction. The advantage of this is that the horizontal displacement of the support wheel standing on the ground during the swivelling process is reduced because at least a proportion of this movement is now compensated for by the reversing of the agricultural machine In this connection a particularly advantageous embodiment of the invention is provided if the distance covered by the agricultural working machine in the reversing direction corresponds substantially to the horizontal variation of the length of the header attachment that takes place in the longitudinal direction of the agricultural working machine. This can almost fully compensate for a displacement of the support wheel on the ground during the swivelling movement of the header attachment, so that in this extremely low tyre wear may be expected.

Further advantageous embodiments constitute the object of further dependent claims are described an the following with reference to exemplary embodiments shown in several figures, in which:
- Figure 1: shows a section, of an agricultural working machine with a header attachment adapted on the front, in a side view
- Figure 2: shows a detailed view of the travelling mechanism, with support wheels in non-working position A and working position B
- Figure 3: shows a detailed view of the swivelling process of the header attachment from the non-working position A into the transport position C, and
- Figure 4: shows a detailed embodiment of the header attachment in a side view.

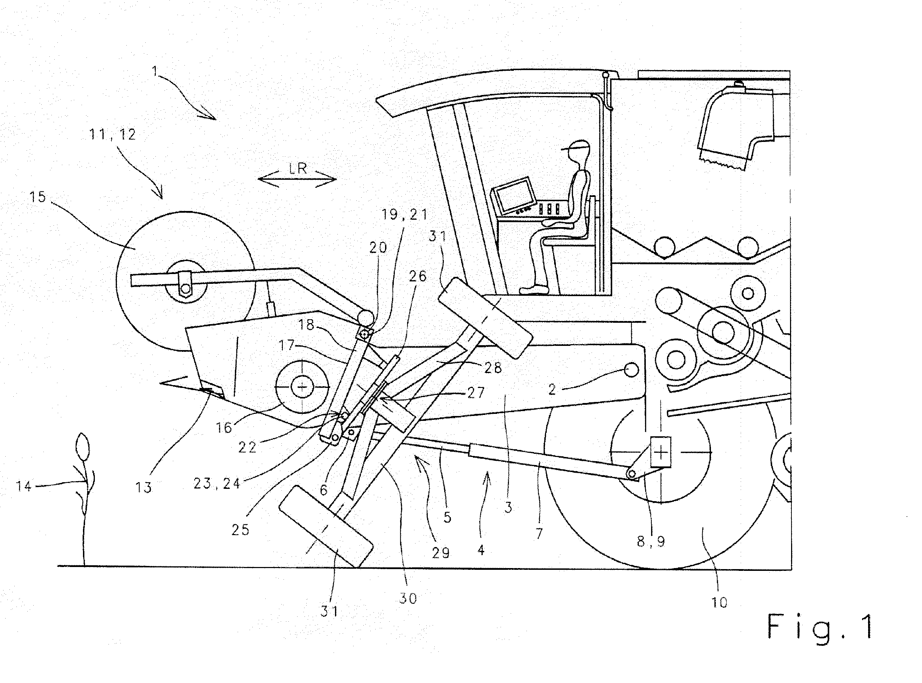

Fig. 1 shows schematically a front section of an agricultural working machine 1, which may be designed, for example, as a combine harvester or forage harvester. Agricultural working machine 1 accommodates in its front region a swivel axis 2 arranged transversely to its longitudinal direction LR, about which axis a so-called drawing-in assembly 3 can be swivelled in the vertical direction. According to whether agricultural working machine 1 is designed as a combine harvester or a forage harvester, this drawing-in assembly 3 would be designed either as a well known inclined conveyor on the combine harvester, or as a drawing-in housing on a forage harvester, also known from prior art . The swivelling movement of the drawing-in assembly 3 is generally realized by lifting cylinders 4 arranged with the drawing-in assembly 3 on the bottom, whereas the piston rods 5 of these cylinders 4 bear upon retaining flanges 6 associated with drawing-in assembly 3, whilst the cylinders 7 are arranged pivotably to the support frame 8 or a front axis 9 of the agricultural working machine 3 accommodating front castor wheels 10. The Drawing-in assembly 3 is then swivelled in the vertically upward or downward direction by pressurizing or depressurizing of the lifting cylinders 4.

On its front end the drawing-in assembly 3 is adapted with the header attachment 12, in the exemplary embodiment designed as corn cutting unit 11, details of the adaption will be described below. In a manner known form prior art the header attachment 12 is provided with a cutter bar unit 13 for harvesting a grown crop 14, which is positioned during the harvesting process by a reel 15 associated with the header attachment 12, and is finally collected by a transverse conveying mechanism 16 and transferred to the drawing-in assembly 3 arranged rearward to the header attachment 12.

The rear wall 17 of the header attachment 12 is reinforced by a support fame 18, which in its top region accommodates a swivel axis 19 extending transversely to the longitudinal direction LR of the agricultural working machine 1. In the simplest case this swivel axis 19 is formed when retaining flanges 20, penetrated by bores, are formed on drawing-in assembly 12 in its front and top regions, which flanges are penetrated by removal plug-in bolts 21. To ensure that the header attachment 12 bears precisely upon drawing-in assembly 3, it is at the same time fixed to drawing-in assembly 3 by means of known locking devices 22 in its bottom region. These locking devices 22 may also be formed on one side by plug-in bolts 23 interacting with flanges. However, it is also conceivable for plug-in bolts 23 themselves to be designed as hydraulic or electrical adjusting elements 24, so that these locking devices 22 could also be remotely activated and the plug-in bolts 23 would not have to be inserted or pulled out directly by hand.

Furthermore, retaining flanges 25, which are fixedly connected to an intermediate frame structure 26, are formed on support frame 18 of the header attachment 3 in its bottom region. Arranged almost centrally and on the side facing away from the header attachment 3, the intermediate frame structure 26 accommodates a king pin mechanism 27, which is connected fixedly or pivotably at the other end to the support frame structure 28 of a travelling mechanism 29. The Travelling mechanism 29 comprises, at the bottom, a travelling mechanism axle 30, which accommodates freely rotatable support wheels 31 on both sides. It lies within the scope of the invention for travelling mechanism 29 described to be arranged on header attachment 12, on both sides of the drawing-in assembly 3, and to comprise only one support wheel 31 or a plurality of support wheels 31.

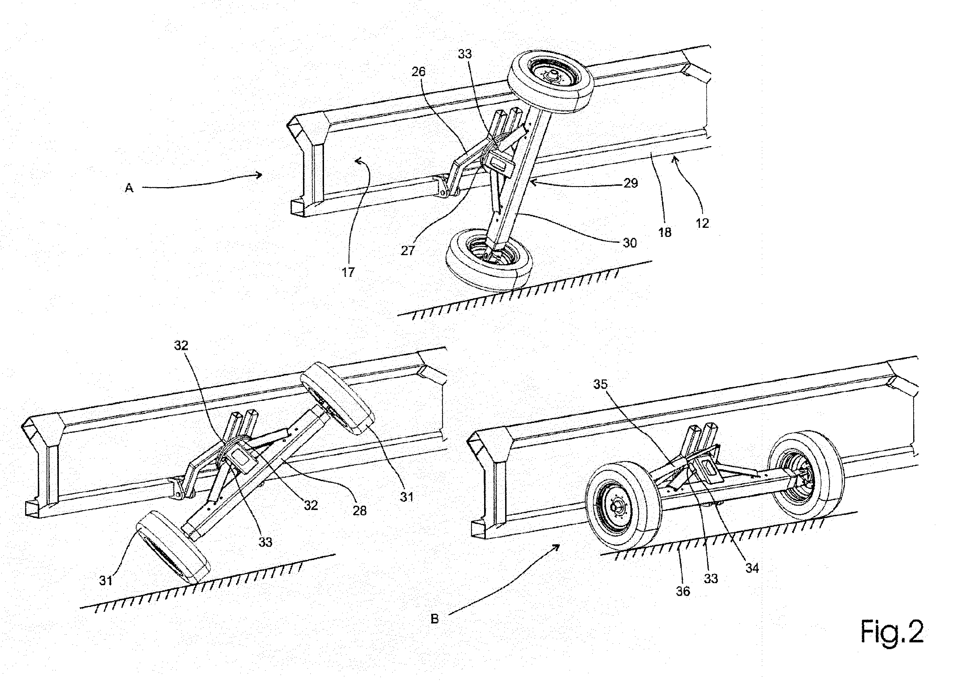

According to Fig. 2 the support frame structure 28 of the travelling mechanism 29 accommodating support wheels 31 can be swivelled by means of the kin pin mechanism 27 from a so-called non-working position A, in which travelling mechanism axle 30 is located in a vertical position extending almost along rear wall 17 of the header attachment 12, to a working position B, in which the travelling mechanism axis 30 then extends approximately parallel with the rear wall 17 of said header attachment 12. In a very simple embodiment this swivelling may be carried out by hand so that the flanges 32 of the king pin mechanism 27, lying one on top of the other, are penetrated by bores 33 and a removable pull-out bolt 34 determines the position of the flanges 32 relative to each other in that it is penetrated by different bores 33 in the working position B and the non-working position A. In a user-friendly embodiment a remotely controllable adjusting element 35, for example a lifting cylinder may also be provided, which cylinder can be electrically or hydraulically actuated, which rotates the flanges 32 of the king pin mechanism 27 one against the other so that the travelling mechanism 29 can be automatically swivelled between the working position B and the non-working position A. Because said travelling mechanism 29 can be swivelled in the described manner a position of the travelling mechanism 29 can be reached, in working position B, where the support wheels 31 support a considerable proportion of the weight of the header attachment 12 directly on the ground 36 during harvesting, so that there is no overloading of the vehicle axles 9 of the agricultural working machine 1. So that the travelling mechanism 29 always adopts an optimum position relative to the ground 36 due to the geometric conditions of the header attachment 12 and its association with drawing-in assembly 3 in the working position B, the intermediate frame structure 26 fastened to support frame 18 and accommodating travelling mechanism 29 has an inclined arrangement relative to the rear wall 17 of the header attachment 12.

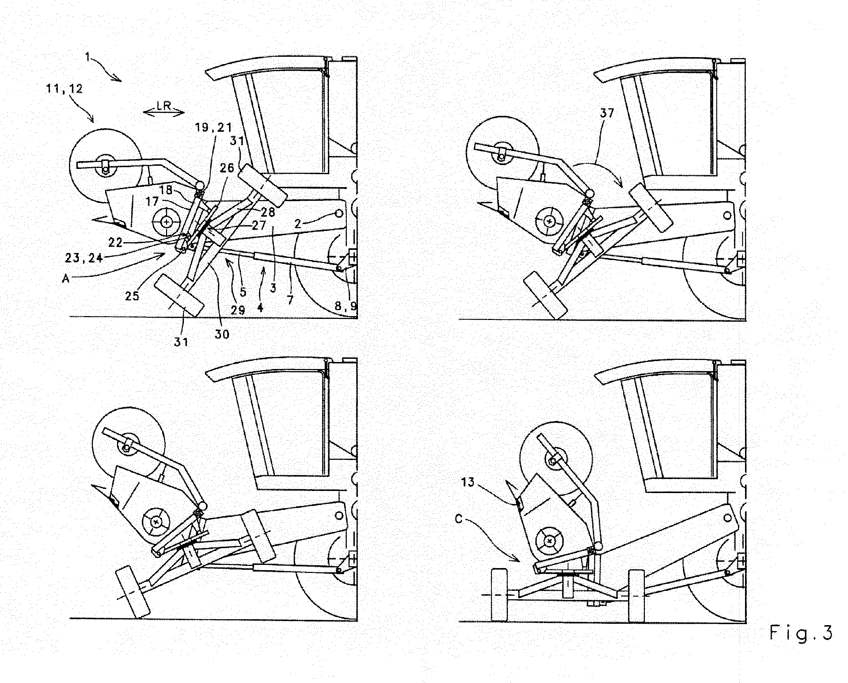

Figure 3 now describes the process according to the invention in which the header attachment 12 swivels into transport position C. At first the header attachment 12 is swivelled into a position away from the ground, shown in the first picture of Fig. 3 by pressurizing of the lifting cylinders 4 associated with drawing-in assembly 3. The travelling mechanism 29 is then positioned in its non-working position A by actuating the king pin mechanism 27, as already described. The Locking devices 22, described in more detail below, which fixedly connect the header attachment 12 to the drawing-in assembly 3 in a region close to the ground, are then detached. While the pressurizing of the lifting cylinders 4 retracts the piston rods 5, the drawing-in assembly 3 moves in the direction of ground 36. Since the header attachment 12, after locking devices 22 are detached, can now be freely rotated about its swivel axis 19 arranged transversely to the longitudinal direction LR of the agricultural working machine 1, header attachment 12 begins to rotate at that moment about this swivel axis 19 according to arrow direction 37 as soon as one of castor wheels 31 is supported on the ground 36. If the drawing-in assembly 3 has reached its lowest position, the header attachment 12 is rotated almost 90° according to arrow direction 37 about its swivel axis 19, whereas in the lowest point of the drawing-in assembly 3 the support wheels 31 associated with the travelling mechanism 29 have reached a position in which they are able to support the weight of header attachment 12 on the ground 36. As soon as this position is reached (last picture in Fig. 3), the header attachment 12 is in the so-called transport position C, the header attachment 12 then being arranged so that its cutter bar unit 13 points substantially in a vertical and upwards direction. The particular advantage of this is also that there is no risk of injury from the knifes of the cutter bar unit 13 during road transport since they point upwards and are therefore of difficult access.

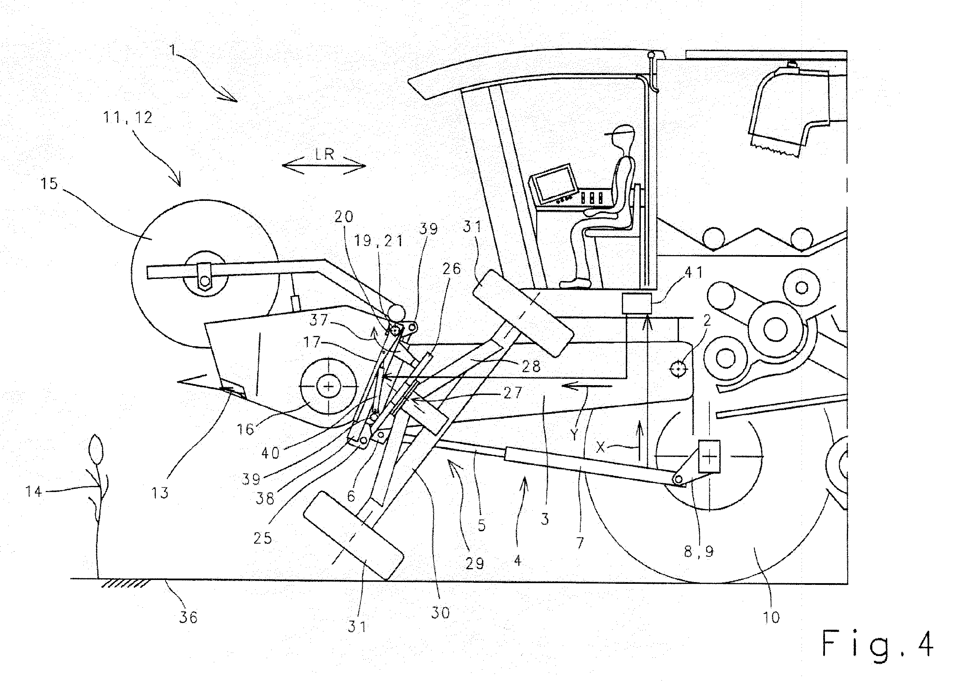

In an embodiment of the invention provision may be made, according to Fig. 4, for the swivel axis 19 of the header attachment 12 to be integrated in an intermediate frame 38, and for intermediate frame 38 to be fixedly connected, by suitable locking means 39 of prior art, such as quick-release fasteners, to the front region of the drawing-in assembly 3. The advantage of such an arrangement is that the header attachment 12 can be adapted quickly to the agricultural working machine 1. This effect is particularly advantageous, for example, when the swivel movement 37 of the header attachment 12 is supported about its swivel axis 19 by means of pressure-loadable lifting cylinders 40. These could then be integrated directly in the intermediate frame 38, or, if necessary, also in the hydraulic supply systems required for their operation. A particularly efficient support of the swivel movement of the header attachment 12 is provided when the pressurizing of these lifting cylinders 40 is coupled, described in greater detail later, to the pressurizing of the lifting cylinders 4 of the drawing-in assembly 3. This would then also have the advantage that the header attachment 12 would not have to be supported almost completely by a support wheel 31 on the ground 36 during the swivelling process, so that the wear caused by the displacement of the wheel on the ground 36 and transverse to its axis of rotation would be reduced. In a preferred embodiment a control and evaluation unit 41 is associated either with the agricultural working machine 1 or the header attachment 12, which unit determines the spatial position of the drawing-in assembly 3, and particularly its position relative to the ground 36, on the basis of the known geometric relationships from pressure signals X determined on the lifting cylinders 4 of the drawing-in assembly 3 in a manner known from prior art and therefore not described in further detail. Because the geometry of the relevant header attachment 12 and its position relative to the drawing-in assembly 3 are known, the control and evaluation unit 41 can now generate cylinder adjusting signals Y derived from the pressure signals X, which define according to the described invention the position signals Z, for pressurizing or depressurizing the lifting cylinders 40 associated with the header attachment 12, whereas the cylinder adjusting signals Y control the swivelling 37 of the header attachment 12 in such a manner that the loads acting on support wheels 31 are reduced. On the other side the sliding of the support wheels 31 on the ground may also be reduced or fully prevented thereby if the agricultural working machine 1 travels backwards as long as the header attachment 12 accomplishes a pivotable movement 37 on its swivel axis 19, so that not the support wheels 31, but the agricultural working machine 1, compensates the length variations that occur and whereas the support wheels 31 remain substantially in one position.

It lies within the scope of knowledge of a person skilled in the art to modify the swivelling process of a header attachment provided with travelling mechanisms in a manner not shown, or to use it in applications other than those demonstrated in order to achieve the effects described without departing from the scope of the invention.

### List of reference numbers:

- 1: Agricultural working machine
- 2: Swivel axis
- 3: Drawing-in assembly
- 4: Lifting cylinder
- 5: Piston rod
- 6: Retaining flange
- 7: Cylinder
- 8: Support frame
- 9: Front axis
- 10: Castor wheel
- 11: Corn cutting unit

- 12: Header attachment
- 13: Cutter bar unit
- 14: Grown crop
- 15: Reel
- 16: Transverse feed mechanism
- 17: Rear wall
- 18: Support frame

- 19: Swivel axis
- 20: Retaining flange
- 21: Plug-in bolt
- 22: Locking device
- 23: Plug-in bolt
- 24: Adjusting element
- 25: Retaining flange
- 26: Intermediate frame structure
- 27: King pin mechanism
- 28: Support frame structure
- 29: Travelling mechanism
- 30: Travelling mechanism axis

- 31: Support wheel
- 32: Flange
- 33: Bore
- 34: Pull-out bolt
- 35: Adjusting element
- 36: Ground
- 37: Arrow direction
- 38: Intermediate frame
- 39: Locking means
- 40: Lifting cylinder
- 41: Control and evaluation unit

- A: Non-working position
- B: Working position
- C: Transport position
- X: Pressure signals
- Y: Cylinder adjusting signals
- Z: Position signal
- LR: Longitudinal direction

## Claims

1. An agricultural working machine, such as a combine harvester or forage harvester, with a drawing-in assembly arranged on the front for accommodating a header attachment which is designed to harvest and convey a harvested crop, wherein a travelling mechanism comprising at least one support wheel is associated with the header attachment on one or both sides of the drawing-in assembly,
**characterised in**
**that** the header attachment (12) is at least arranged pivotably about a swivel axis (19) extending transversely to the longitudinal direction (LR) of the agricultural working machine (1) on the drawing-in assembly (3) in such a manner that the header attachment (12) is automatically swivelled from a working position (B) into a transport position (C) when the drawing-in assembly (3) is lowered, and wherein at least one support wheel (31) of at least one travelling mechanism (29) supports the header attachment (12) on the ground (36) in the transport position (C).

2. An agricultural working machine according to Claim 1,
**characterised in**
**that** the swivelling of the header attachment (12) from the working position (B) into the non-working position (C) comprises a swivel range of approximately 90°

3. An agricultural working machine according to any one of the preceding claims,
**characterised in**
**that** the header attachment (12) has a support frame (18) in its rear region and in that the swivel axis (19) extending transversely to the longitudinal direction (LR) of the agricultural working machine (1) is associated with this support frame (18) at the top, and the corresponding support frame structure (28) of the one or more travelling mechanisms (29) are associated with this frame (18) at the bottom.

4. An agricultural working machine according to Claim 3,
**characterised in**
**that** the swivel axis (19) extending transversely to the longitudinal direction (LR) of the agricultural working machine (1) is associated with an intermediate frame (38) at the top and the respective support frame structure (28) of the travelling mechanism or mechanisms (29) is/are associated with that intermediate frame (38) at its bottom, and in that the intermediate frame (38) can be at least fixedly connected to the drawing-in assembly (3).

5. An agricultural working machine according to any one of the preceding claims,
**characterised in**
**that** the swivel axis (19) extending transversely to the longitudinal direction (LR) of the agricultural working machine (1) is locked in the working position (B) of the header attachment (12).

6. An agricultural working machine according to any one of the preceding claims,
**characterised in**
**that** the support frame structure (28) of the at least one travelling mechanism (29) comprises at least one travelling mechanism axle (30) and in that the travelling mechanism axle (30) comprises at least one support wheel (31) on both sides.

7. An agricultural working machine according to any one of the preceding claims,
**characterised in**
**that** the support frame structure (28) of at least one of the travelling mechanisms (29) comprises a king pin mechanism (27) at the top, wherein the king pin mechanism (27) is arranged fixedly or pivotably on the support frame (18) of the header attachment (12) or the intermediate frame (38) by means of an intermediate frame structure (26).

8. An agricultural working machine according to Claim 7,
**characterised in**
**that** the king pin mechanism (27) allows swivelling of the travelling mechanism axis (30) of at least 90°.

9. An agricultural working machine according to Claim 8,
**characterised in**
**that** the swivelling of the king pin mechanism (27) operates automatically or by hand.

10. An agricultural working machine according to any one of Claims 7 to 9,
**characterised in**
**that** the travelling mechanism axle (30) in the working position (B) of the header attachment (12) can be swivelled into at least one position in which at least one of the support wheels (31) of at least one of the travelling mechanisms (29) supports the header attachment (12) on the ground (36).

11. An agricultural working machine according to any one of the preceding claims,
**characterised in**
**that** the drawing-in assembly (3) can be swivelled by means of adjusting cylinders 4 about a swivel axis (2) extending transversely to the longitudinal direction (LR) of the agricultural working machine (1),
in that the swivel movement of the header attachment (12) is effected by means of adjusting cylinders (40) about at least one of the swivel axes (19) extending transversely to the longitudinal direction (LR) of the agricultural working machine (1),
in that the position of the adjusting cylinders (4) of the drawing-in assembly (3) and/or the spatial position of the drawing-in assembly (3) is detected and coded in position signals (X, Z),
in that the position signals (X, Z) of the drawing-in assembly (3) are transmitted to a control and evaluation unit (41),
in that cylinder adjusting signals (Y) are generated for the adjusting cylinders (40) of the header attachment (12) in the control and evaluation unit (41) as a function of the position signals (X, Z) of the drawing-in assembly (3), and
in that these cylinder adjusting signals (Y) result in automatic swivelling of the header attachment (12) about its swivel axis (19), wherein at the same time the load is relived on the support wheels (31) of the header attachment (12).

12. An agricultural working machine according to any one of Claims 1 to 10,
**characterised in**
**that** the agricultural working machine (1) is moved in a reversing direction during the lowering of the drawing-in assembly (3) and swivelling of the header attachment (12).

13. An agricultural working machine according to Claim 12, **characterised in**
**that** the distance covered by the agricultural working machine (1) in the reversing direction substantially corresponds to the horizontal length variation of the header attachment (12) occurring in the longitudinal direction of the agricultural working machine (1).
